# EUROPEAN PATENT SPECIFICATION

(11) **EP 1 954 456 B1**
(45) Date of publication and mention of the grant of the patent: **18.04.2012**
(21) Application number: 06799790.8
(22) Date of filing: 20.10.2006
(51) Int. Cl.: B26B 29/06, B26B 25/00, B26D 1/04, B26F 1/38, D06H 7/00, B26F 3/08, B26D 7/00, B26D 5/00, B26D 5/04, B26D 5/08

(54) **CUTTING DEVICE**
SCHNEIDEVORRICHTUNG
DISPOSITIF DE DECOUPE

(30) Priority: 25.10.2005 SE 0502353
(43) Date of publication of application: 13.08.2008
(73) Proprietor: Johansson, Patrik, 653 42 Karlstad (SE)
(72) Inventor: Johansson, Patrik, 653 42 Karlstad (SE)
(74) Representative: Lundquist, Lars-Olof
(86) International application number: PCT/SE2006/001192
(87) International publication number: WO 2007/050015

(56) References cited:
- EP-A1- 0 489 290
- WO-A1-2004/041492
- DE-A1- 19 812 584
- DE-U1- 20 309 886
- US-A- 2 211 082
- US-A- 5 485 676

## Description

The present invention relates to a cutting device arranged for cutting straight cuts along a cutting line in a planar, extended blank, said cutting device including:
- a fixing member, being arranged for releasably fixing the cutting device to the blank before a cut;
- a cutting member, including a straight ruler and a cutting head movable along the ruler, said cutting head being arranged for making said cut in the blank; and
- a displacement member, being arranged for enabling displacement of the cutting device across the blank between two successive cuts.

Particularly, the invention relates to a cutting device for blanks having an extension in at least one direction which exceeds several metres. One example of such a blank is material for fabric displays. Such displays may have an area which exceeds at least three-four metres in height or width. When manufacturing such displays, the starting blank is a fabric, usually of polymeric material, which can have a width exceeding four metres. The message which is to be conveyed, for example an advertising message, is printed on a predetermined area of the fabric, after which the printed area of the fabric is cut out in order to subsequently be used in the display.

It happens that a cutting table having a fixedly mounted cutting frame is used for cutting out fabric areas for smaller displays, for example such having an extension smaller than 1.5-2 metres. In such a cutting table, the fabric is positioned in a desired position on the cutting table below the cutting frame before a cut. When the cut has been made, the fabric is moved into a new position on the cutting table, so that the next cut can be made. There are several problems with this method of cutting out fabric areas. Firstly, the repositioning of the fabric between two successive cuts is a cumbersome and time-consuming operation. Furthermore, this problem is accentuated with large fabrics. Another problem is that the cut length is restricted by the width of the cutting table. It is true that these problems can be avoided to some extent by using a cutting table which allows XY-movement of the cutting head. However, the problem that the size of the cutting table restricts the size of the fabric area which can be cut out remains. It is true that it is technically possible to design cutting tables which are capable of handling the normally occurring maximum size of the fabric area, but such cutting tables represent a very large investment which few display manufacturers have the possibility to make.

A cutting device according to the preamble of claim 1 is also known from the document DE 198 12 584 A1.

Because of the foregoing problems, and because of the fact that fabric displays, as a rule, are not produced in large series, the cutting out of the printed fabric area is, to a large extent, made by hand, i.e. by means of a pair of scissors or other cut-generating tools, for example a hot knife cutter. This is time-consuming, however, particularly for large fabric areas.

The object of the present invention is to provide a cutting device, which can achieve in principle unrestrictedly long cuts without repositioning of the fabric, said cutting device being easy to handle and, in addition, having a substantially more simple construction than previously known cutting tables.

The cutting device according to the invention is characterised in that the displacement member allows transverse displacement as well as rotation of the cutting device in a plane being parallel to the plane of the blank.

Accordingly, according to the invention, the cutting device is arranged for being displaced across the blank, and not the other way around.
Figures 1-5 show a first embodiment of a cutting device according to the invention.
Figure 6 shows a second embodiment of a cutting device according to the invention.
Figures 7-10 show a first embodiment of a carriage in a cutting device according to the invention.
Figures 11 and 12 show a second embodiment of a carriage in a cutting device according to the invention.
Figures 13 and 14 show an alternative embodiment of a fixing member in a cutting device according to the invention.
Figure 15 shows a third embodiment of a cutting device according to the invention.

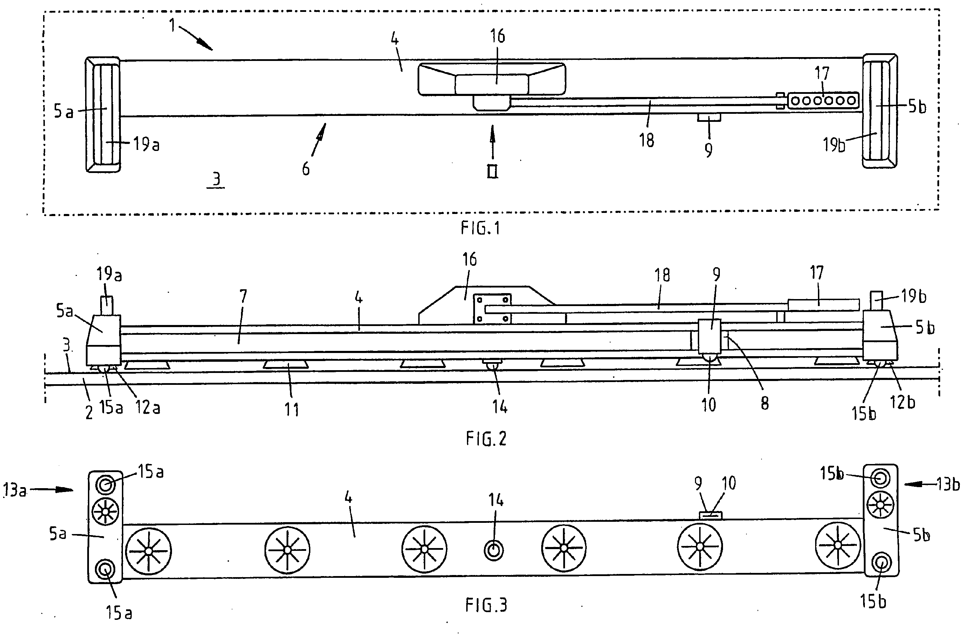

In the following, a first embodiment of a cutting device according to the invention will be described with reference to Figures 1-5. This embodiment is adapted for cutting out printed fabric areas for fabric displays from a fabric of polymeric material.

Figure 1 shows the cutting device 1 from above, and Figure 2 shows the cutting device 1 from the direction indicated by the arrow II in Figure 1, i.e. from the side. In an operative position, the cutting device 1 is intended to be operated by an operator across a planar support 2, preferably a stable working table, onto which a blank in the form of a fabric 3 has been extended.

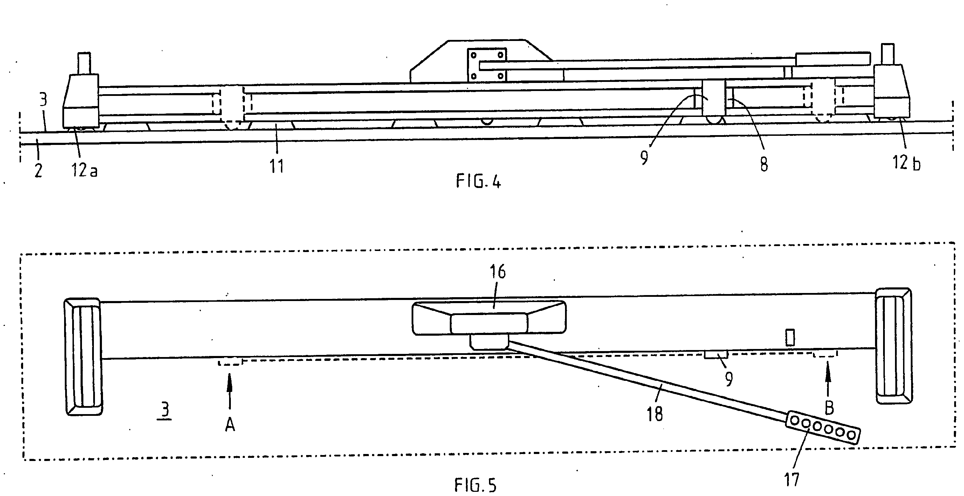

The cutting device 1, which in this embodiment is approximately 3.2 metres long, 30 centimetres wide and 15 centimetres high, includes an elongated ruler 4 and two similar, but mirror-inverted, end elements 5a, 5b. The end elements 5a, 5b are arranged at the ends of the ruler 4, and thus the ruler 4 connects the two end elements 5a, 5b. The ruler 4 exhibits a straight long side 6 and a track 7, extending along the entire long side 6. The cutting device also includes a carriage 8, being arranged to travel in the track 7. Thereby, the carriage 8 can be operated between two end positions, being defined by the ends of the track 7. Preferably, the carriage 8 is driven electrically, i.e. with an electric motor. The carriage 8 supports a cutting head 9, extending outside the long side 6. The cutting head 9 includes a knife 10 in the form of a sharpened circular blade, being rotatably arranged in the cutting head 9 at the lower end of the cutting head 9. The cutting head 9 can be operated in a vertical direction in relation to the ruler 4, between a lower, active, cutting position, shown in Figure 4, and an upper, passive, non-cutting position, shown in Figure 2. Preferably, the cutting head 9 is driven in its vertical movement pneumatically, i.e. with a pneumatic cylinder.

Furthermore, the cutting device 1 includes a plurality of suction cups 11, 12a and 12b, being arranged on the underside of the ruler 4, on one hand, and on the undersides of the end elements 5a, 5b, on the other hand. The suction cups 11, 12a and 12b are arranged so that they are facing the fabric 3 when the cutting device 1 is in an operative position. As is evident from Figure 3, showing the cutting device 1 from below, the suction cups 11 of the ruler 4 are six in number and located along a line extending in the direction of the ruler 4. The suction cups 11 are substantially uniformly distributed along the length of the ruler 4. The suction cups 11 have a diameter which is approximately 12-13 centimetres. The end elements 5a, 5b have one suction cup 12a, 12b each, which is located at a portion 13a, 13b of the respective end element 5a, 5b projecting perpendicularly from the long side 6 of the ruler 4. The suction cups 12a, 12b of the end elements 5a, 5b have a diameter which is approximately 5-6 centimetres.

The cutting device 1 also includes supporting elements, comprising roller balls 14, 15a, 15b. Each roller ball 14, 15a, 15b includes a metal ball, resting substantially frictionlessly in a concave, half-spherical seat. Like the suction cups 11, 12a, 12b, the supporting elements are arranged on the underside of the ruler 4, on one hand, and on the undersides of the end elements 5a, 5b, on the other hand. Like the cutting head 9, the supporting elements can be operated pneumatically in a vertical direction between a lower, active position, in which the roller balls 14, 15a, 15b rest upon the fabric 3 and support the cutting device 1 (see Figure 2), and an upper, passive position, in which the roller balls 14, 15a, 15b have a clearance to the fabric 3 (see Figure 4).

Furthermore, the cutting device 1 includes a drive unit, including the pneumatic and electrical drive system which drives the carriage 8, the cutting head 9 and the supporting elements 14, 15a, 15b. The drive system is also arranged for bringing air to flow out of or into the suction cups 11, 12a, 12b. In the present embodiment, the main part of the drive system is collected in a space on top of the ruler 4, said space being covered by a casing 16.

The cutting device 1 also includes a control unit 17, by means of which the operator can control the pneumatic and electrical system by means of controls in the control unit 17. The control unit 17 is connected to the rest of the cutting device 1 via a bar 18, in which bar 18 control wires are running which, from a control point of view, connect the controls of the control unit 17 to the drive system. Accordingly, via the control unit 17, the operator can control the horizontal movement of the carriage 8 and the vertical movement of the cutting head 9 and the supporting elements 14, 15a, 15b, and also the air flow through the suction cups 11, 12a, 12b by means of the drive system. Such sub-drive systems are known per se, and will not be described more closely here. In this context, however, it can be mentioned that the working pressure in the pneumatic sub-drive systems is approximately 60-70 Pa in this embodiment. Preferably, the bar 18 is articulately attached to the rest of the cutting device 1, whereby the operator can unfold the control unit 17 as shown in Figure 5. In this way, the operator can control the drive system from different positions around the cutting device 1.

When using the cutting device 1, the operator positions the cutting device on the fabric 3, which has been extended onto the support 2. By means of the control unit 17, the operator brings the cutting device 1 into a displaceable condition, in which condition the cutting head 9 is in its passive or upper position, and in which condition the roller balls 14, 15a, 15b are in their active or lower positions, as shown in Figure 2. Accordingly, in the displaceable condition, only the roller balls 14, 15a, 15b of the supporting elements are in contact with the blank 3, and thus the cutting device 1 can be displaced completely freely across the fabric 3. Herein, completely free displacement means that the cutting device 1 can be brought into an optional position above the fabric 3, i.e. that the cutting device 1, in addition to being displaced purely transversely, also can be rotated. In other words, in this displaceable condition of the cutting device 1, the roller balls 14, 15a, 15b constitute displacement members, allowing transverse displacement as well as rotation of the cutting device 1 in the plane of the fabric 3, or more generally in a plane being parallel to the fabric 3.

In order to facilitate the displacement, the cutting device 1 includes handles 19a, 19b at the end elements 5a, 5b, which handles 19a, 19b the operator can grasp manually in order to bring the cutting device 1 into the desired position. Preferably, the bar 18 can be locked in an optional unfolded position via the control unit 17, wherein also the control unit 17 can constitute a handle which the operator can grasp manually in order to bring the cutting device 1 into the desired position. When displacing the cutting device 1, the operator preferably causes air to flow out of the suction cups 11, 12a, 12b, via the control unit 17, whereby air cushions are formed underneath the suction cups 11, 12a, 12b, something which further facilitates the operator's displacement of the cutting device 1. Accordingly, also the displacement members can include the suction cups 11, 12a, 12b.

In the following, a working sequence illustrating how the cutting device 1 is used will be described.
I. The operator prepares the cutting device 1 for displacement, i.e. brings the cutting head 9 into the passive or upper position of the cutting head 9, brings the supporting elements 14, 15a, 15b into the active or lower positions of the supporting elements 14, 15a, 15b and, alternatively, causes air to flow out of the suction cups 11, 12a, 12b so that air cushions are formed underneath the cutting device 1.
II. By means of a transverse displacement and/or a rotational displacement of the cutting device 1, the operator moves the cutting device 1 into the desired position above the fabric 3, i.e. into a position where the operator wants to make a cut in the fabric 3.
III. The operator stops the air flow through the suction cups 11, 12a, 12b and brings the roller balls 14, 15a, 15b into their passive or upper positions, so that the suction cups 11, 12a, 12b are brought to rest upon the fabric 3.
IV. The operator causes air to be suctioned in through the suction cups 11, 12a, 12b, so that a negative pressure is formed in the suction cups 11, 12a, 12b, said negative pressure fixing the cutting device 1 in the desired position. In other words, in this step the suction cups 11, 12a, 12b constitute a fixing members, fixing the cutting device 1 to the fabric 3.
V. The operator brings the carriage 8 into a first position A above the fabric 3 where the operator wants the cut in the fabric 3 to start.
VI. The operator lowers the cutting head 9 to the active or lower position of the cutting head 9, so that the knife 10 cuts through the fabric 3.
VII. The operator causes the carriage 8 to be displaced in the desired direction along the ruler 4 into a second position B above the fabric 3 where the operator wants the cut 3 in the fabric to end, wherein the knife 10 makes a cut in the fabric 3 along a cutting line AB. In other words, in this step the carriage 8, the cutting head 9 and the knife 10 constitute a cutting member, making a cut in the fabric 3.

Steps I-VII are repeated until all desired cuts have been made in the fabric 3. It is appreciated that said positions A and B can be the end positions of the cutting head 9 or optional positions between the end positions, as shown in Figure 5, all depending on the length of the desired cut and the desired starting and ending position, respectively, of the cut. It is also appreciated that the starting position of a cut can be constituted of the ending position of the preceding cut, wherein in principle unrestrictedly long cuts can be made in the fabric without repositioning the fabric.

As is evident from Figure 3, the suction cups 11 underneath the ruler 4 constitute a first set of suction cups, being arranged on one side of the cutting line AB, whereas the suction cups 12a and 12b underneath the end elements 5a, 5b constitute a second set of suction cups, being arranged on the other side of the cutting line AB or its extension. It is preferred to arrange the suction cups in this way, i.e. on both sides of the cutting line AB or its extension, since it is thereby ensured that the reaction force whereby the fabric 3 and the support 2 are influencing the cutting device 1 during a cutting operation does not tilt or tip the cutting device 1. In this context, it can be mentioned that the force whereby the cutting head 9 presses upon the fabric 3 during a cutting operation is approximately 17 N in this embodiment.

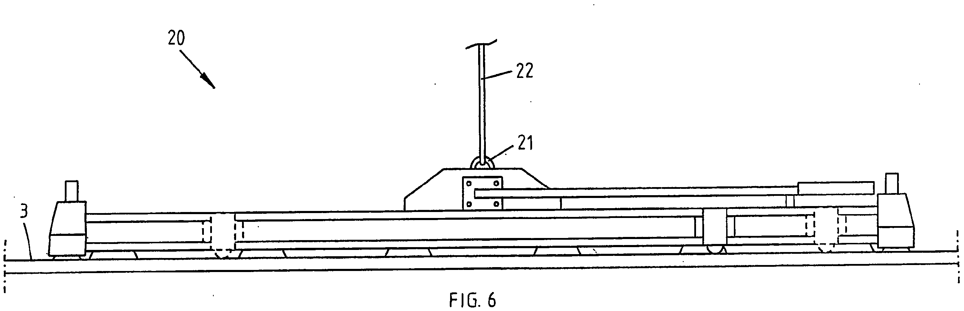

Figure 6 shows a second embodiment of a cutting device 20 according to the invention. In this case, the displacement members includes an eyelet 21 and a hydraulic cylinder 22, which is articulately arranged in the eyelet 21 at its piston rod end, as shown in Figure 6. At its upper end, the hydraulic cylinder 22 travels in a rail (not shown) arranged in the horizontal plane, so that the hydraulic cylinder 22 can be displaced freely in a plane above the fabric 3. When the operator wants to displace the cutting device 20, for example between two successive cuts in the fabric 3, the operator causes the hydraulic cylinder 22 to lift the cutting device 20 from the fabric 3 through the agency of the eyelet 21, at the same time as the operator can cause air to flow out of the suction cups 11, 12a, 12b, so that air cushions are formed underneath the cutting device 20. When the cutting device 20 no longer is resting upon the blank 3, the operator can move the cutting device 20 into a new position, at the same time as the air cushions prevent the cutting device 20 from unintentionally bumping into the fabric 3 during the displacement. When the cutting device 20 is above its new position, the operator disconnects the air flow through the suction cups 11, 12a, 12b and lowers the cutting device 20, so that it once again rests upon the fabric 3. Thereafter, the operator can fix the cutting device 20 to the fabric 3, and make a new cut into it, in the same way as has been described in the foregoing.

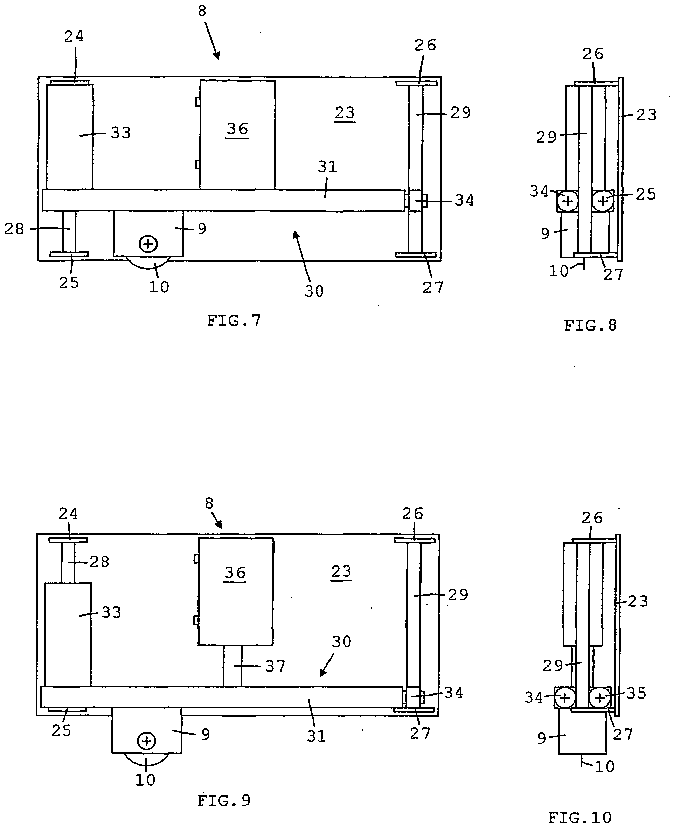

In the following, components of said carriage 8 with associated cutting head 9 will be described more closely with reference to Figures 7-10. The carriage 8 includes a plate 23, preferably of sheet metal. Four flanges 24-27 project perpendicularly from the plate 23. Preferably, the flanges 24-27 are constituted of cut-out parts of the metal plate, which are folded so that they obtain their perpendicular orientation in relation to the plate 23. Between the flanges 24 and 25, a first circular cylindrical rod 28 is arranged in parallel with, and at a distance from, the plate 23. In the same way, and in parallel with the first rod 28, a second circular cylindrical rod 29 is arranged between the flanges 26 and 27. Furthermore, the carriage 8 includes a slide 30, being arranged for reciprocating sliding movement along the rods 28 and 29. For this purpose, the slide 30 includes an elongated structural element 31, extending between the rods 28 and 29. Furthermore, the slide 30 includes a ball bushing 33, being connected to the structural element 31 at one of its ends, more specifically at the rod 28. The ball bushing 33 encloses the rod 28 and has a relatively large extension in the length direction of the rod 28, which ensures that a constant angle, which preferably is 90°, is always maintained between the rod 28 and the structural element 31. At the other end of the structural element 31, i.e. at the rod 29, the slide 30 includes two ball bearings 34 and 35, each on its own side of the rod 29 and extending along it, in order to accommodate reaction forces from the rod 29 in the perpendicular direction of the plate 23. Accordingly, the ball bushing 33 and the two ball bearings 34 and 35 makes it possible for the slide 30 to move substantially frictionlessly along the rods 28, 29 without jamming.

The cutting head 9 is rigidly attached to the slide 30 at the underside of the slide 30, as is evident from Figures 7 and 9. As has been described in the foregoing, a knife 10 in the form of a sharpened circular blade is rotatably arranged at the cutting head, so that the knife 10 projects from the lower end of the cutting head 9. For operating the slide 30 along the rods 28 and 29, the carriage 8 includes a pneumatic two-way piston 36, being rigidly attached to the plate 23 in a position above the structural element 31 and between the rods 28 and 29. Via a piston rod 37, the piston 36 causes the slide 30 to move upwards or downwards along the rods 28, 29. By the agency of the slide 30 and the pneumatic piston 36, the cutting head 9 can thus be operated in a vertical direction between the lower, active, cutting position, shown in Figures 9 and 10, and the upper, passive, non-cutting position, shown in Figures 7 and 8.

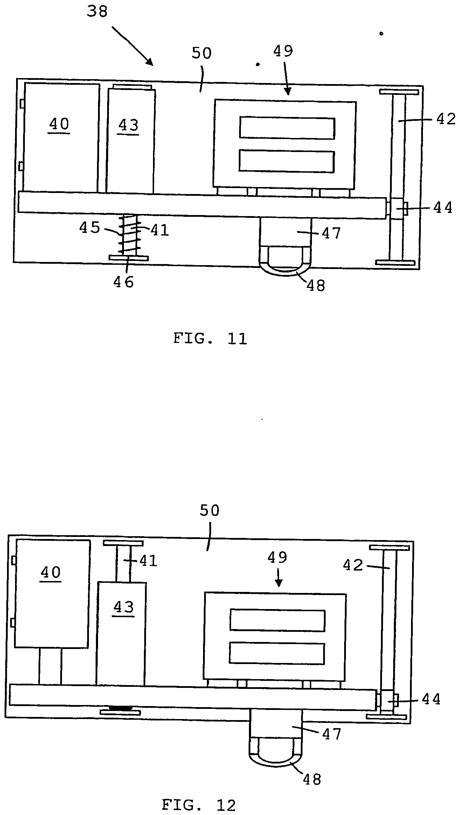

In the following, a second embodiment of a carriage 38 will be described with reference to Figures 11 and 12. Like the above-described carriage 8, the carriage 38 includes a slide 39 which, along two parallel rods 41 and 42 and by the influence from a pneumatic piston 40, can be operated in a vertical direction between a lower position, shown in Figure 12, and an upper position, shown in Figure 11. The guiding of the slide 39 along the rods 41, 42 takes place in the same way as has been described in the foregoing, i.e. by means of a ball bushing 43 and ball bearings, out of which only one ball bearing 44 is visible in Figures 11 and 12. Also in this case, the piston 40 is a two-way piston. In this case, however, the downward movement of the slide 39 is dampened by a pressure spring 45, being arranged around the rod 41 between the slide 39 and one of the lower flanges 46. When the piston 40 brings the slide 39 from the upper position to the lower position, energy is stored in the pressure spring 45 at the same time, which energy subsequently is used in order to facilitate the return movement of the slide 39, i.e. the movement from the lower position to the upper position.

A cutting head 47 is rigidly attached to the slide 39 at the underside of the slide 39. A resistive hot knife cutter 48 projects from the underside of the cutting head 47, which cutter is heated in a known way by means of a current source 49 passing a current through the hot knife cutter 48. In the present case, the current source 49 delivers a voltage of 0.4 V and a current intensity of 70 A. In a known way, the hot knife cutter 48 is arranged for burning a cut into the fabric, rather than physically cutting the fabric. Hot knife cutters are preferably used when generating cuts in synthetic materials where it is desirable that the fibres in the cut do not fray. By the use of a hot knife cutter, the fibres are fused together in the cut. Hot knife cutters are preferably used when cuts are to be made in thin and sparsely woven synthetic materials. In this case, the current source 49 is arranged on the upper side of the slide 39 and will thus follow the vertical movement of the slide. Alternatively, the current source 49 can be attached to the plate 50, wherein the current source 49 feeds the hot knife cutter 48 via flexible, electrical wires, allowing the slide to move the vertical distance which is required in order to bring the cutting head 47 between the upper and the lower position.

It is appreciated that a working pressure of the piston 36, 40 which is too high can result in the fixing members of the cutting device becoming detached from the fabric surface when the cut is made, or in damage to the cutting head, and that a pressure which is too low can result in the cut not becoming continuous. The preferred working pressure of the piston 36, 40 is dependent on the type of cutting head which is used. For the type of cutting head which includes a rotary circular blade, i.e. the type of cutting head being described in connection with Figures 7-10, a working pressure of the piston 36 within the interval 0.5-2 bars, preferably however 1.2-1.6 bars, has proved to work best for cutting conventional advertising fabrics. For the type of cutting head including a hot knife cutter, i.e. the type of cutting head which is described in connection with Figures 11 and 12, a working pressure of the piston 36 within the interval 0.3-1 bars, preferably however 0.6-0.8 bars, has proved to work best. The working pressure of the piston can be set when manufacturing the cutting device. Alternatively, the carriage can be designed so that the working pressure of the piston can be adjusted by the operator, in which case it is possible for the operator to adapt the working pressure to the type of fabric which is to be cut.

The translational speed of the carriage when positioning, i.e. when the carriage is in the upper, passive or non--cutting position, can be constant, for example 1.5 m/s. Preferably, however, the cutting rate, i.e. the translational speed of the carriage when generating cuts while in its lower, active or cutting position, can be set by the operator. In this way, the operator can adapt the cutting rate to the type of fabric which is to be cut or to the desired accuracy. Trials have shown that a cutting rate within the interval 0.2-2 m/s is suitable, wherein the lower part of the interval is suitable for a hot knife cutter and the upper part for a cutting head having a rotary circular blade.

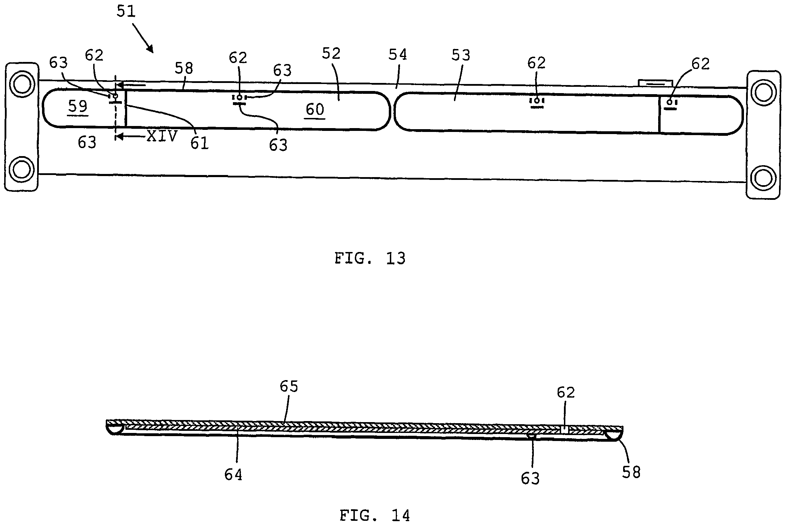

Figures 13 and 14 show an alternative embodiment of a fixing member in a cutting device 51 according to the invention. In this case, the fixing member includes two elongated suction strips 52 and 53 being used for fixing the ruler 54 of the cutting device 51 to the fabric. The suction strips 52, 53 are arranged at the long side of the ruler 54 of the cutting device 51 where the carriage 55 is travelling, and they are extending together along substantially the entire length of the ruler 54. In this embodiment, the end elements 56 and 57 lack suctioning units. Each suction strip 52, 53 includes a first sealing strip 58, extending in a recess around the periphery of the suction strip 52, 53. Preferably, the sealing strip 58 is of rubber, and preferably it exhibits a D-shaped cross-section, as shown in Figure 14. Each suction strip can be divided into two or several suction zones. In the shown example, each suction strip 52, 53 is divided into two suction zones 59, 60, being separated by a second sealing strip 61. Each suction zone 59, 60 includes an opening 62 for evacuating the air in the suction zone. Distance members 63, for example in the form of pieces of sealing strip, are preferably arranged around each opening 62 in order to prevent the opening 62 from being suctioned to the fabric surface and being blocked when air is evacuated from the suction zone. Preferably, the suction strip 52, 53 includes two elongated plates 64, 65, preferably of metal, placed on top of each other and attached to each other, wherein one plate 64 is slightly narrower that the other plate 65 in order to form said recess for the sealing strip 58. When displacing the cutting device 51, the operator preferably causes air to flow out of the openings 62, wherein air cushions are formed underneath the suction strips 52, 53, something which facilitates the operator's displacement of the cutting device 51. Accordingly, also the displacement member of the cutting device can include the suction strips 52, 53.

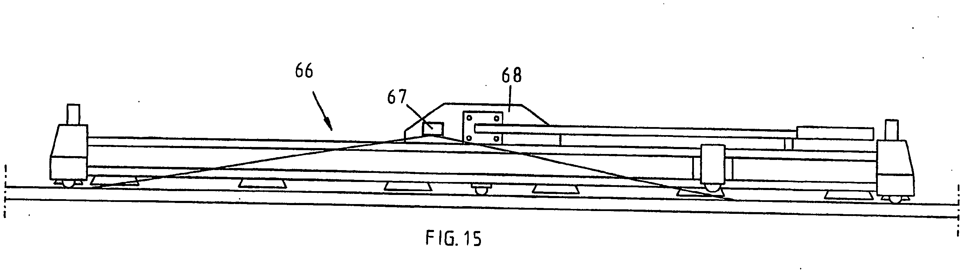

Preferably, the cutting device includes some kind of aiming device in order to facilitate correct positioning of the cutting device before it is fixed to the fabric surface by means of the fixing member. Figure 15 shows such a cutting device 66. The cutting device 66 includes a lighting source 67, for example a linear laser, being arranged on the casing 68 of the cutting device 66 in order to project a straight light line onto the fabric surface, said line coinciding with the cutting or section line of the cutting device. By means of the projected line, the operator can easily and rapidly position the cutting device above the position where the cut in the fabric is desired.

The invention has been described starting from a few concrete embodiments. It is appreciated, however, that the invention can be realized by other embodiments, without departing from the inventive idea. For instance, a long cutting device requires more suction cups than a short one. A suitable number of suction cups for a 3.2 metres long cutting device, weighing approximately 21 kg, can be 6 underneath the ruler, plus one underneath each end element, whereas a suitable number for a 2.1 metres long cutting device, weighing approximately 17 kg, can be 4 plus 2. For a cutting device equipped with suction strips, for example, a 5 metres long cutting device can include 3 suction strips having a total of 6 suction zones. Furthermore, it is appreciated that the carriage, the cutting head, the suction cups and the supporting elements can be driven and controlled in a number of different ways within the scope of the invention; pneumatically, electrically or in another way. Furthermore, it is appreciated that the cutting function itself can be realised in other ways than with a cutting knife or a hot knife cutter, for instance with a laser.

## Claims

1. Cutting device (1, 20, 51, 66), arranged for cutting straight cuts along a cutting line (AB) in a planar, extended blank (3), said cutting device (1, 20, 51, 66) including:
- a fixing member, being arranged for releasably fixing the cutting device (1, 20, 51, 66) to the blank (3) before a cut;
- a cutting member, including a linear ruler (4, 54) and a cutting head (9, 47) movable along the ruler (4, 54), said cutting head (9, 47) being arranged for making said cuts in the blank (3); and
- a displacement member, being arranged for enabling displacement of the cutting device (1, 20, 51, 66) across the blank (3) between two successive cuts,
**characterised in that** the displacement member allows transverse displacement as well as rotation of the cutting device (1, 20, 51, 66) in a plane being parallel to the plane of the blank (3).

2. Cutting device (1, 51, 66) according to claim 1, **characterised in that** the displacement member includes roller balls (14, 15a, 15b), which are arranged to assume an active position, where the roller balls (14, 15a, 15b) are in contact with the blank (3) and support the cutting device (1, 51, 66), when displacing the cutting device (1, 51, 66), and which are arranged to assume a passive position, where the roller balls (14, 15a, 15b) are not in contact with the blank (3), during a cutting operation.

3. Cutting device (20) according to claim 1, **characterized in that** the displacement member includes a lifting device, being arranged to lift the cutting device (20) so that it has a clearance to the blank (3).

4. Cutting device (1, 20, 66) according to any one of claims 1-3, **characterised in that** the displacement member includes suction cups (11, 12a, 12b), being arranged to form air cushions between the cutting device (1, 20, 66) and the blank (3) when the cutting device (1, 20, 66) is displaced.

5. Cutting device (1, 20, 66) according to any one of claims 1-4, **characterised in that** the fixing member includes suction cups (11, 12a, 12b), being arranged to suction the cutting device (1, 20, 66) to the blank (3) by means of a negative pressure.

6. Cutting device (1, 20, 66) according to claim 5, **characterised in that** a first group (11) of the suction cups generating a negative pressure is arranged on one side of the cutting line (AB) or its extension, and that a second group (12a, 12b) of the suction cups generating a negative pressure is arranged on the other side of the cutting line (AB) or its extension.

7. Cutting device (51) according to any one of claims 1-3, **characterised in that** the displacement member includes suction strips (52, 53), being arranged to form air cushions between the cutting device (51) and the blank (3) when the cutting device (51) is displaced.

8. Cutting device (51) according to any one of claims 1-3, **characterised in that** the fixing member includes suction strips (52, 53), being arranged to suction the cutting device (51) to the blank (3) by means of a negative pressure.

9. Cutting device (51) according to any one of claims 7 and 8, **characterised in that** the suction strips (52, 53) are arranged at the long side of the ruler (54) of the cutting device (51) where the cutting head is travelling, and **in that** the suction strips (52, 53) are extending together substantially the entire length of the ruler (54).

10. Cutting device (1, 20, 51, 66) according to any one of claims 1-9, **characterised in that** the cutting head (9, 47) can be operated in a vertical direction between a lower position and an upper position.

11. Cutting device according to claim 10, **characterised in that** the cutting head (9) includes a cutting knife.

12. Cutting device according to claim 11, **characterised in that** the cutting knife has the form of a sharpened, rotary circular blade (10).

13. Cutting device according to claim 10, **characterised in that** the cutting head (47) includes a hot knife cutter (48).

14. Cutting device according to claim 13, **characterised in that** the hot knife cutter (48) has the form of a resistive element.

15. Cutting device (66) according to any one of claims 1-14, **characterised in that** it includes an aiming device (67) for projecting a straight light line, coinciding with the cutting line, onto the blank.

## Patentansprüche

1. Schneidvorrichtung (1, 20, 51, 66), die zum Schneiden von geraden Schnitten entlang einer Schneidlinie (AB) in einem ebenen, ausgedehnten Rohling (3) eingerichtet ist, wobei die Schneidvorrichtung (1, 20, 51, 66) Folgendes aufweist:
- ein Fixierungselement, das zum lösbaren Fixieren der Schneidvorrichtung (1, 20, 51, 66) an dem Rohling (3) vor einem Schnitt eingerichtet ist;
- ein Schneidelement, das ein geradliniges Lineal (4, 54) und einen Schneidkopf (9, 47) aufweist, der entlang dem Lineal (4, 54) bewegbar ist, wobei der Schneidkopf (9, 47) zum Durchführen der Schnitte in dem Rohling (3) eingerichtet ist; und
- ein Verlagerungselement, das zum Ermöglichen einer Verlagerung der Schneidvorrichtung (1, 20, 51, 66) über den Rohling (3) zwischen zwei aufeinander folgenden Schnitten eingerichtet ist,
**dadurch gekennzeichnet, dass**
das Verlagerungselement eine Querverlagerung und eine Drehung der Schneidvorrichtung (1, 20, 51, 66) in einer Ebene ermöglicht, die zu der Ebene des Rohlings (3) parallel ist.

2. Schneidvorrichtung (1, 51, 66) nach Anspruch 1,
**dadurch gekennzeichnet, dass**
das Verlagerungselement Rollkugeln (14, 15a, 15b) aufweist, die dazu eingerichtet sind, eine aktive Position einzunehmen, in der die Rollkugeln (14, 15a, 15b) mit dem Rohling (3) in Kontakt stehen und die Schneidvorrichtung (1, 51, 66) stützen, wenn die Schneidvorrichtung (1, 51, 66) verlagert wird, und die dazu eingerichtet sind, während eines Schneidvorgangs eine passive Position einzunehmen, in der die Rollkugeln (14, 15a, 15b) nicht mit dem Rohling (3) in Kontakt stehen.

3. Schneidvorrichtung (20) nach Anspruch 1,
**dadurch gekennzeichnet, dass**
das Verlagerungselement eine Hebeeinrichtung aufweist, die dazu eingerichtet ist, die Schneidvorrichtung (20) anzuheben, so dass sie einen Abstand zu dem Rohling (3) hat.

4. Schneidvorrichtung (1, 20, 66) nach einem der Ansprüche 1 - 3,
**dadurch gekennzeichnet, dass**
das Verlagerungselement Saugnäpfe (11, 12a, 12b) aufweist, die dazu eingerichtet sind, Luftpolster zwischen der Schneidvorrichtung (1, 20, 66) und dem Rohling (3) zu bilden, wenn die Schneidvorrichtung (1, 20, 66) verlagert wird.

5. Schneidvorrichtung (1, 20, 66) nach einem der Ansprüche 1 - 4,
**dadurch gekennzeichnet, dass**
das Fixierungselement Saugnäpfe (11, 12a, 12b) aufweist, die dazu eingerichtet sind, die Schneidvorrichtung (1, 20, 66) mittels eines Unterdrucks an dem Rohling (3) anzusaugen.

6. Schneidvorrichtung (1, 20, 66) nach Anspruch 5,
**dadurch gekennzeichnet, dass**
eine erste Gruppe (11) der Saugnäpfe, die einen Unterdruck erzeugen, auf einer Seite der Schneidlinie (AB) oder deren Verlängerung angeordnet ist und dass eine zweite Gruppe (12a, 12b) der Saugnäpfe, die einen Unterdruck erzeugen, auf der anderen Seite der Schneidlinie (AB) oder deren Verlängerung angeordnet ist.

7. Schneidvorrichtung (51) nach einem der Ansprüche 1 - 3,
**dadurch gekennzeichnet, dass**
das Verlagerungselement Saugstreifen (52, 53) aufweist, die dazu eingerichtet sind, Luftpolster zwischen der Schneidvorrichtung (51) und dem Rohling (3) zu bilden, wenn die Schneidvorrichtung (51) verlagert wird.

8. Schneidvorrichtung (51) nach einem der Ansprüche 1 - 3,
**dadurch gekennzeichnet, dass**
das Fixierungselement Saugstreifen (52, 53) aufweist, die dazu eingerichtet sind, die Schneidvorrichtung (51) mittels eines Unterdrucks an dem Rohling (3) anzusaugen.

9. Schneidvorrichtung (51) nach einem der Ansprüche 7 und 8,
**dadurch gekennzeichnet, dass**
die Saugstreifen (52, 53) an der langen Seite des Lineals (54) der Schneidvorrichtung angeordnet sind, an der der Schneidkopf entlang läuft, und dass die Saugstreifen (52, 53) sich zusammen im Wesentlichen über die gesamte Länge des Lineals (54) erstrecken.

10. Schneidvorrichtung (1, 20, 51, 66) nach einem der Ansprüche 1 - 9,
**dadurch gekennzeichnet, dass**
der Schneidkopf (9, 47) in einer vertikalen Richtung zwischen einer unteren Position und einer oberen Position betreibbar ist.

11. Schneidvorrichtung nach Anspruch 10,
**dadurch gekennzeichnet, dass**
der Schneidkopf (9) ein Schneidmesser aufweist.

12. Schneidvorrichtung nach Anspruch 11,
**dadurch gekennzeichnet, dass**
das Schneidmesser die Form eines geschliffenen, rotierenden Rundmessers hat.

13. Schneidvorrichtung nach Anspruch 10,
**dadurch gekennzeichnet, dass**
der Schneidkopf (47) ein Heißmesser-Schneidegerät (48) aufweist.

14. Schneidvorrichtung nach Anspruch 13,
**dadurch gekennzeichnet, dass**
das Heißmesser-Schneidegerät (48) die Form eines Widerstandselements hat.

15. Schneidvorrichtung (66) nach einem der Ansprüche 1-14,
**dadurch gekennzeichnet, dass**
sie eine Zielvorrichtung (67) zum Projizieren einer geraden, hellen Linie, die mit der Schneidlinie zusammenfällt, auf den Rohling aufweist.

## Revendications

1. Dispositif de découpe (1, 20, 51, 66), conçu pour réaliser des découpes droites le long d'une ligne de découpe (AB) dans une ébauche plane allongée (3), ledit dispositif de découpe (1, 20, 51, 66) comprenant :
- un élément de fixation, qui est conçu pour fixer de manière libérable le dispositif de découpe (1, 20, 51, 66) à l'ébauche (3) préalablement à une découpe ;
- un élément de découpe, comprenant une règle linéaire (4, 54) et une tête de découpe (9, 47) mobile le long de la règle (4, 54), ladite tête de découpe (9, 47) étant conçue pour réaliser lesdites découpes dans l'ébauche (3) ; et
- un élément de déplacement, qui est conçu pour permettre le déplacement du dispositif de découpe (1, 20, 51, 66) en travers de l'ébauche (3) entre deux découpes successives,
**caractérisé par le fai**t que l'élément de déplacement autorise le déplacement transversal ainsi que la rotation du dispositif de découpe (1, 20, 51, 66) dans un plan qui est parallèle au plan de l'ébauche (3).

2. Dispositif de découpe (1, 51, 66) selon la revendication 1,
**caractérisé par le fait que** l'élément de déplacement comprend des billes roulantes (14, 15a, 15b), qui sont disposées pour prendre une position active, dans laquelle les billes roulantes (14, 15a, 15b) sont en contact avec l'ébauche (3) et supportent le dispositif de découpe (1, 51, 66), lors d'un déplacement du dispositif de découpe (1, 51, 66), et qui sont disposées pour prendre une position passive, dans laquelle les billes roulantes (14, 15a, 15b) ne sont pas en contact avec l'ébauche (3), durant une opération de découpe.

3. Dispositif de découpe (20) selon la revendication 1,
**caractérisé par le fait que** l'élément de déplacement comprend un dispositif de levée, qui est conçu pour lever le dispositif de découpe (20) de telle sorte qu'il est espacé de l'ébauche (3).

4. Dispositif de découpe (1, 20, 66) selon l'une quelconque des revendications 1 à 3,
**caractérisé par le fait que** l'élément de déplacement comprend des ventouses (11, 12a, 12b), qui sont conçues pour former des coussins d'air entre le dispositif de découpe (1, 20, 66) et l'ébauche (3) lorsque le dispositif de découpe (1, 20, 66) est déplacé.

5. Dispositif de découpe (1, 20, 66) selon l'une quelconque des revendications 1 à 4,
**caractérisé par le fait que** l'élément de fixation comprend des ventouses (11, 12a, 12b), qui sont conçues pour aspirer le dispositif de découpe (1, 20, 66) contre l'ébauche (3) au moyen d'une pression négative.

6. Dispositif de découpe (1, 20, 66) selon la revendication 5,
**caractérisé par le fait qu'**un premier groupe (11) des ventouses générant une pression négative est disposé sur un côté de la ligne de découpe (AB) ou de son prolongement, et qu'un second groupe (12a, 12b) des ventouses générant une pression négative est disposé sur l'autre côté de la ligne de découpe (AB) ou de son prolongement.

7. Dispositif de découpe (51) selon l'une quelconque des revendications 1 à 3,
**caractérisé par le fait que** l'élément de déplacement comprend des bandes ventouses (52, 53), qui sont conçues pour former des coussins d'air entre le dispositif de découpe (51) et l'ébauche (3) lorsque le dispositif de découpe (51) est déplacé.

8. Dispositif de découpe (51) selon l'une quelconque des revendications 1 à 3,
**caractérisé par le fait que** l'élément de fixation comprend des bandes ventouses (52, 53), qui sont conçues pour aspirer le dispositif de découpe (51) contre l'ébauche (3) au moyen d'une pression négative.

9. Dispositif de découpe (51) selon l'une quelconque des revendications 7 et 8,
**caractérisé par le fait que** les bandes ventouses (52, 53) sont disposées sur le côté long de la règle (54) du dispositif de découpe (51) où la tête de découpe se déplace, et que les bandes ventouses (52, 53) s'étendent ensemble sensiblement sur toute la longueur de la règle (54).

10. Dispositif de découpe (1, 20, 51, 66) selon l'une quelconque des revendications 1 à 9,
**caractérisé par le fait que** la tête de découpe (9, 47) peut être actionnée dans une direction verticale entre une position inférieure et une position supérieure.

11. Dispositif de découpe selon la revendication 10,
**caractérisé par le fait que** la tête de découpe (9) comprend un couteau de découpe.

12. Dispositif de découpe selon la revendication 11,
**caractérisé par le fait que** le couteau de découpe se présente sous la forme d'une lame circulaire rotative aiguisée (10).

13. Dispositif de découpe selon la revendication 10,
**caractérisé par le fait que** la tête de découpe (47) comprend un couteau de découpe à chaud (48).

14. Dispositif de découpe selon la revendication 13,
**caractérisé par le fait que** le couteau de découpe à chaud (48) se présente sous la forme d'un élément résistif.

15. Dispositif de découpe (66) selon l'une quelconque des revendications 1 à 14,
**caractérisé par le fait qu'**il comprend un dispositif de visée (67) destiné à projeter une ligne lumineuse droite, coïncidant avec la ligne de découpe, sur l'ébauche.
